# EUROPEAN PATENT SPECIFICATION

(11) **EP 3 709 789 B1**
(45) Date of publication and mention of the grant of the patent: **15.01.2025**
(21) Application number: 18839891.1
(22) Date of filing: 14.11.2018
(51) Int. Cl.: A01D 45/00, A01D 46/30

(54) **MACHINE FOR HARVESTING ASPARAGUS**
SPARGELERNTEMASCHINE
MACHINE POUR LA RÉCOLTE D'ASPERGES

(30) Priority: 16.11.2017 NL 2019923
(43) Date of publication of application: 23.09.2020
(73) Proprietor: Avl Motion, 5843 AT Westerbeek (NL)
(72) Inventor: VAN LANKVELD, Arno Henricus Wilhelmus, 5843 AT Westerbeek (NL)
(74) Representative: Patent Business B.V.
(86) International application number: PCT/NL2018/050761
(87) International publication number: WO 2019/098827

(56) References cited:
- EP-A1- 1 958 494
- DE-A1- 102009 011 368
- DE-A1- 102013 019 531
- DE-U1- 202004 009 929

## Description

### FIELD OF THE INVENTION

The present invention is in the field of a machine for harvesting asparagus, a module for cutting asparagus, a brush module for removing soil, a soil replenish unit, a method for harvesting asparagus, as well as asparagus obtained by said method. The machine and method can in principle also be used for similar plants, especially Asparagaceae species in general, such as the genus of Asparagus, such as Asparagus officinalis, such as the genus of Ornithogalum, such as Ornithogalum pyrenaicum, and Cichorioideae species, such as Tragopogon, and Scorconera.

### BACKGROUND OF THE INVENTION

Asparagus is very popular in certain countries and is often white, though also large quantities of green asparagus are harvested. Asparagus is produced in large quantities in China (>90%), Peru, Mexico, the USA, and the EU, especially Germany, the Netherlands, and the UK. White asparagus are cultivated by covering shoots with soil as they grow, i.e. earthed up. Freshness is considered very important and hence asparagus is typically consumed within a few days after harvesting or processed for storage. Lower ends of white asparagus are peeled before cooking or raw consumption. Asparagus is a seasonal dish, available from April to the end of June. When grown in tunnels the growth season can be increased significantly from February to November.

Asparagus quality is mainly dependent on stem thickness, length, and age. Older, thicker stalks can be woody, which is not preferred. Typical used classes are AA (20-28 mm thick), A (16-20 mm), B (12-16 mm), and AAA (>28 mm). A length is preferably from 10-35 cm. In addition asparagus is preferably mainly straight, does not have discolorations especially at a head section, the head section being closed, not being hollow, having no damage, having no brown spots, and having a regular appearance. Asparagus are cleaned well before cooking, in view of soil remains typically being present. In addition most of the skin is removed.

Asparagus is typically harvested manually, which is therefore labour intensive. Each individual asparagus needs to be located in the field, and then be cut manually under the soil at a dedicated length. Manual harvesting thereby also introduces a large variability, such as in length. Also asparagus may be harvested too early, such as having an inferior length, or too late, such as having a woody skin. In addition the plant itself may be damaged during harvesting, which may lead to starvation of the plant. Also many too young asparaguses are cut unintended, as often largely parallel and upwards growth of spatially closely distributed asparagus of the same plant occurs, of which one asparagus may be ready for harvesting, but the other(s) not.

Attempts have been made to make asparagus harvesting machines, but these machines are unreliable, too expensive, not cost effective, can not compensate for variations in the field, such as location, depth, space in between individual asparagus, etc., and may cause damage to the asparagus plant and to the harvested asparagus. An example of such a machine is recited in EP 1 958 494 A1; the machine comprises a moving vehicle, a recognition element with cameras, a controller, and two articulated arm robots for withdrawal of asparagus. The robots are located at a side of the machine and withdrawn asparagus are put in containers also at a side of the machine. The robots move from an asparagus to be harvested to said container, and back. Asparaguses are apparently harvested a either side of the machine. DE 10 2009 011368 A1 recites a machine for harvesting asparagus, but effectively it recites only a cutting module which is mounted on a base frame and therefore can only move with respect to the frame in a perpendicular manner.

The present invention therefore relates to a machine for harvesting asparagus, which solves one or more of the above problems and drawbacks of the prior art, providing reliable results, without jeopardizing functionality and advantages.

### SUMMARY OF THE INVENTION

It is an object of the invention to overcome one or more limitations of the devices of the prior art and to improve harvesting of asparagus and the like. The present machine can be used in a continuous mode, wherein the machine moves over the soil, such as with a constant speed, and the cutting modules move with the same speed in an opposite direction of the machine during cutting. So there is no need for stopping during harvesting. The cutting modules move in a spatially cyclic mode, as in circling through the machine from a back side to a front side and vice versa. Thereto a (physical) feedback loop is provided. The machine and method can in principle also be used for similar plants, especially Asparagaceae species in general, such as the genus of Asparagus, such as Asparagus officinalis, such as the genus of Ornithogalum, such as Ornithogalum pyrenaicum, and Cichorioideae species, such as Tragopogon, and Scorconera. The asparagus may be white, green or purple. The present machine comprises a frame for supporting further elements, such as the brush module, the cutting module, and the feedback loop, which may be horizontal, vertical, or a combination thereof. The frame, and its elements attached thereto, can be moved over the soil, as the asparagus are typically covered with soil as they grow, i.e. earthed up. Typically large elongated and elevated beds are formed, typically from one side of a field to another, and typically many parallel beds are present in the field. The asparagus is typically earthed up to some 30-60 cm. Typically trapezoid beds are formed. The present brush module is adapted to remove a top fraction of the soil, typically 1-10 cm, such as 2-6 cm. It is preferred to also remove a side fraction of bed soil, typically 2-15 cm, such as 5-10 cm. A disadvantage of removing soil is that it is preferred to replenish the removed soil in order to restore the bed, which attributes to an extra step. By removing the soil the to be harvested asparagus become visible. Too small asparagus have not yet reach a top segment of the soil (bed) and will not be harvested, but may be harvested a subsequent day, or even later. So only the ones popping out are harvested. The present machine comprises a number of cutting modules, each module cutting a subsequent located asparagus (typically further in an elongated direction of the bed). The cutting modules are movably connected to the frame, such that they can move from a front side of the frame to a back side. As actual cutting takes some time, it is preferred to move each individual cutting module such that with respect to a to be cut asparagus it does not move; put different, relative movement with respect to an earth (determined) coordinate is virtually zero, specifically in a longitudinal direction, whereas movement with respect to a give frame coordinate is equal, but of opposite sign, as the movement of the frame with respect to an earth coordinate. The frame may move with an as high as possible speed, in principle. In practice speed of the frame and hence machine is limited to a few meters per second, such as 1-5 m/sec. In view of the speed of the machine more than two modules are preferred, preferably 3-20 cutting modules, more preferably 4-12 cutting modules, such as 5-10 cutting modules. The present machine can move with an acceptable speed and still cut the asparagus according to the highest standards. In order to limit a size of the machine a feedback loop is provided for cycling each cutting module from a back side, when it is finished with cutting, to a front side of the frame, where it is ready for the next asparagus.

The present machine comprises a cutting module guidance 50, such as a belt, wherein the cutting module guidance may be located at an inner side of the frame, may be in contact with the at least one cutting module, the at least one module being in a position for harvesting, wherein the guidance is adapted to move at a speed substantially equal to the machine but of opposite direction. As such the cutting module guidance is preferably controlled. A sensor may provide information of the relative location of the guidance.

The present machine comprises a driving system, such as an air pressure system 70, and may further comprise a hydraulic system, and an electrical system, for driving cutting modules and optionally other elements of the present system, such as by air, wherein the rotatable connector may be connected to the air pressure system by at least one tube 71. The tube may typically be a flexible tube, such as a spiral tube.

In a second aspect a cutting module for a machine for harvesting of asparagus is disclosed. The cutting module comprises an asparagus tongs, for grabbing asparagus once harvested, the tongs preferably being vertically movable, a cutter for cutting asparagus at a distance under the surface, the cutter preferably being vertically movable, an asparagus locator, the locator preferably being vertically movable. The cutter, the locator, and the tongs are typically each independently movable and may be considered as separate items of the cutting module. The cutting module further comprises a support, typically a frame like support wherein the cutter, the locator, and the tongs are present and attached to. The cutting module is movably located in the support allowing movement in a horizontal direction parallel to the support, such as to move towards a to be harvested asparagus in said horizontal direction. Note that initially the present harvesting machine may provide movement in the horizontal direction parallel to a longitudinal axis of the asparagus bed, thereby moving the at least two cutting modules towards the asparagus.

In a third aspect a brush module for removing soil for a machine for harvesting of asparagus is disclosed. The brush module comprises at least one rotatable brush, for removing a top layer of the soil, and at least two scrapers, for removing side sections of the asparagus bed. Typically a few centimetres soil are removed, such as 2-10 cm, and 2-15 cm of the side sections, such as 5-10 cm.

In a fourth aspect the present invention relates to a method of harvesting of asparagus, comprising moving a harvesting machine horizontally over a bed comprising asparagus parallel to a longitudinal axis of the bed, removing a top layer of the bed soil, locating an asparagus, moving a cutting module in an opposite direction of the harvesting machine at a substantially same speed, harvesting the asparagus, and moving the cutting module to a front side of the harvesting machine. The present machine as well as the present cutting module are especially suited for the present method.

In a fifth aspect at least one bed of asparagus harvested by the present method is disclosed. The quality of said harvested bed of asparagus is much more consistent than for prior art machines or then manually harvested asparagus. For instance typically a whole population of asparagus has a length of 22±4 cm, such as 22±1 cm.

In a sixth aspect a kit of parts comprising at least one part of the present harvesting machine is disclosed.

Advantages of the present description are detailed throughout the description.

### DETAILED DESCRIPTION OF THE INVENTION

In an exemplary embodiment of the present machine the movable frame comprises a motor 11 and wheels 12, and a speed controller 13, and optionally at least one continuous track 16. The motor drives the machine forwards. The wheels are typically located at sides of the machine at a distance such that the machine can move over one asparagus bed, and typically at a front end of the machine, without being in contact with an adjacent bed, whereas the continuous tracks are typically likewise located at an rear end of the machine. A size of a typical machine is a length of 3-6 m, such as 4-5 m, a width of 60-250 cm, such as 80-180 cm, where the feedback loop may extend at one side over a width of 30-70 cm, and a height of 70-200 cm, such as 100-150 cm. The speed controller is adapted to control a speed of the machine with an accuracy of ±10 cm/sec, preferably ±5 cm/sec, such as ±1 cm/sec. The machine may be provided with a position locator, such as a GPS or the like, and/or with a transceiver for wireless communication. As such the machine may be controlled wireless and harvesting can be done fully automated.

In an exemplary embodiment the present machine comprises a rotatable connector 60 connected to the frame, and for each cutting module at least one flexible tube 71 connecting the cutting module to the rotatable connector. The rotatable connector is adapted to provide free movement of the cutting modules in the frame and over the feedback loop, such that continuous control of the cutting modules and power to the cutting modules may be provided.

In an exemplary embodiment of the present machine the frame comprises a central top passage 14 for allowing movement of the cutting modules in a longitudinal direction. The passage is such that the modules can move freely as required, without having any obstruction.

In an exemplary embodiment the present machine comprises a central bottom passage 15 for allowing free movement of the machine over a row of asparagus. The bottom passage is of sufficient height, typically 30-50 cm high, and width, such as 40-80 cm wide.

In an exemplary embodiment of the present machine the cutting module comprises a asparagus tongs 31, which are typically vertically movable, a cutter 32, which is typically vertically movable, an asparagus locator 33, which is typically vertically movable, and wherein the cutting module is movably located in a support 34 allowing movement in a horizontal direction perpendicular to the longitudinal axis. The tongs are for grabbing the harvested asparagus and transporting the asparagus to a container 90. The container is typically located elsewhere on the frame. The locator is for precisely locating a to be harvested asparagus, typically with an accuracy of 0.1-2 cm, such as 0.2-1 cm. The cutter cuts the asparagus. The tongs, cutter, and locator are preferably controlled, such as by providing a sequence of events: the locator locates the asparagus; a control activates the cutter; when cut the cutter is retracted and the tongs are activated; the tongs grab the asparagus and lift the asparagus in a vertical direction; when the cutting module approaches the container or the like the tongs are activated to release the asparagus such as into the container. The present cutting module can move within the support. The support typically has a height of 30-60 cm, such as 40-50 cm, a width of 40-80 cm, such as 50-60 cm, and a depth of 5-25 cm, such as 10-15 cm. The cutting module may also move as a whole in a vertical direction; when moving it approaches the to be harvested asparagus.

In an exemplary embodiment the present machine comprises a soil replenish module 21, for transferring removed soil back to an asparagus bed. As the harvesting is typically done on a daily basis, or as often as required, it is preferred to restore the asparagus bed in its original pre-harvesting state by replenishing soil.

In an exemplary embodiment the present machine comprises a controller 35 for controlling the at least one cutting module, frame speed, feedback loop speed, the brush module, and the soil replenish unit.

In an exemplary embodiment the present machine comprises a location sensor 80, such as an optical sensor, for detecting an asparagus bed.

In an exemplary embodiment the present machine comprises an asparagus storage container 90. Once the asparagus are cut they are moved and stored in the container. The storage container is typically located at an end of the machine, typically on the frame thereof.

In an exemplary embodiment the cutting module comprises control notches 36, each notch driving individually one of asparagus tongs, the cutter, the locator, and the cutting module. When the cutting module moves over a frame, and/or when a certain step in harvesting is performed, a notch may be addressed, such as by an externally present counter notch activator. Once addressed the step may be considered to have been completed, and/or a further step is initiated, etc.

In an exemplary embodiment of the cutting module the cutter comprises a vertical holder 37, such as a rod, a knife blade 38, and a knife blade protector 39, wherein the knife blade is adapted to rotate in a horizontal plane for cutting the asparagus. The knife is thereto provided on a rotation axis, which rotation axis is in a vertical direction, i.e. perpendicular to the soil, such that the knife can rotate parallel to the soil when cutting an asparagus. As cutting of asparagus is somewhat complex, e.g. in view of sub-surface action, the knife needs to be brought towards a lower end of an asparagus. Thereto a vertical holder is provided, preferably a holder with a tapered end or the like for penetrating the soil. A knife is typically provided somewhat higher than the holder end, such as 1-5 cm higher. The knife blade is preferably protected when penetrating the soil, and when being retracted from the soil. Thereto a knife protect is provided, typically a housing substantially around the knife, and having an opening for rotating the knife outward. The opening typically is in the form of a slit.

In an exemplary embodiment of the cutting module the tongs are concave shaped, preferably with an inner radius of 2-10 cm, preferably 3-5 cm, and wherein the tongs are attached to a vertically movable tong holder 31a. Therewith the tongs are suitably adapted for withdrawing and moving asparagus.

In an exemplary embodiment of the cutting module the asparagus locator 33 comprises at least two horizontally rotatable tactile sensors 33a spaced apart at a distance of 1-10 cm, and oriented in a tapered geometry, such that an asparagus can be located. A tapered angle may be between 90-150 degrees, such as 100-120 degrees. As such a not precisely known location of the asparagus, such as determined optically, can be determined more precisely, e.g. with an accuracy of 0.1-2 cm, in order to subsequently harvest the asparagus. The tapered geometry allows for a small misalignment of the cutting module with respect to the asparagus, typically in a direction perpendicular to the longitudinal axis of the asparagus bed. The asparagus may be considered to be "caught" by the locator. The tactical sensors can be rotated in a horizontal plane, typically over an angle of 20-180 degrees, such as 30-60 degrees. The sensors are spaced apart over a small distance, e.g. to allow rotation and to allow detection of the asparagus.

In an exemplary embodiment the cutting module comprises at least one motor 30a, such as a step motor, for driving the cutting module in a vertical and/or a horizontal direction. As the cutting module may need to be moved it is preferred to provide a motor for supporting said movement. Typically the cutting module can be moved over the full available width of the support, and over the full height between the surface of the asparagus bed and the typically vertically fixed upper position of the cutting module.

In an exemplary embodiment the cutting module comprises a distributor 72, such as an air pressure distributor, connectable to an air pressure system, and connected to the tongs, the locator, the cutter, the support, and preferably to the motor. The distributor is adapted to distribute air pressure towards a desired location.

In an exemplary embodiment the brush module 20 comprises a grubber 24 for loosening the soil. Before removing the soil, and in order to protect the asparagus, the soil is preferably loosened in order to support soil removal.

The invention will hereafter be further elucidated through the following examples which are exemplary and explanatory of nature and are not intended to be considered limiting of the invention. To the person skilled in the art it may be clear that many variants, being obvious or not, may be conceivable falling within the scope of protection, defined by the present claims.

### SUMMARY OF THE FIGURES

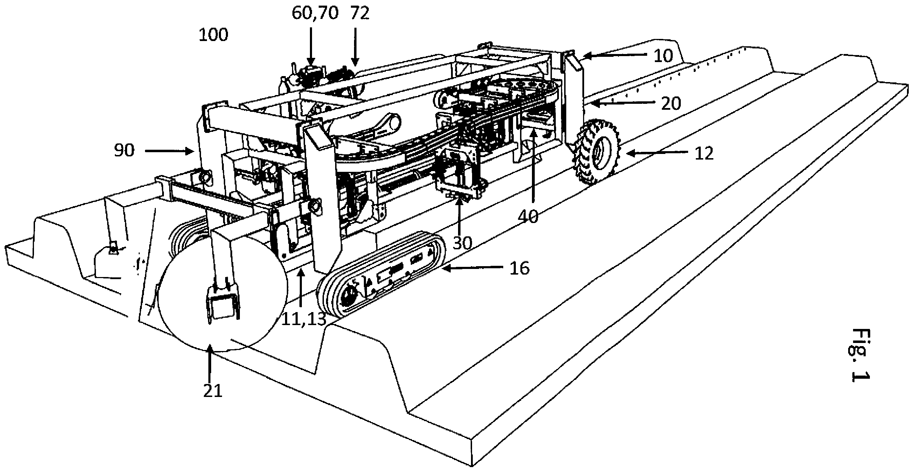

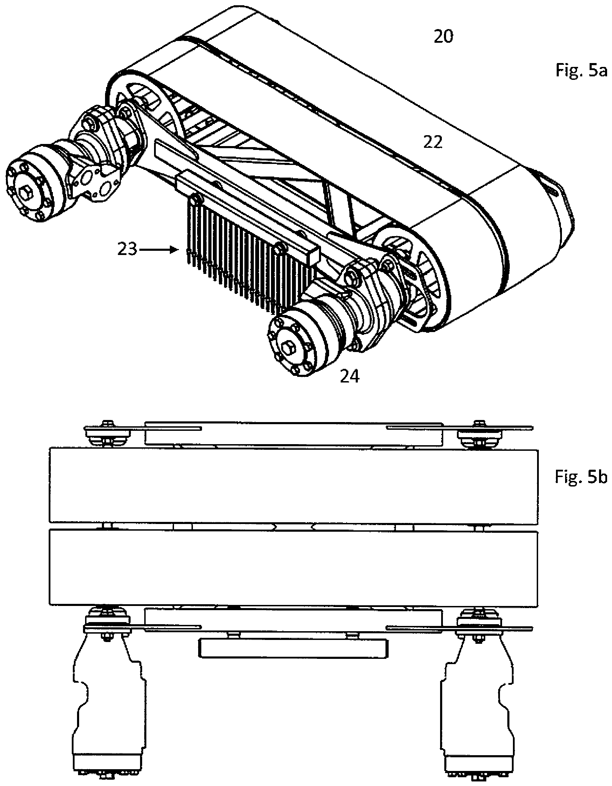

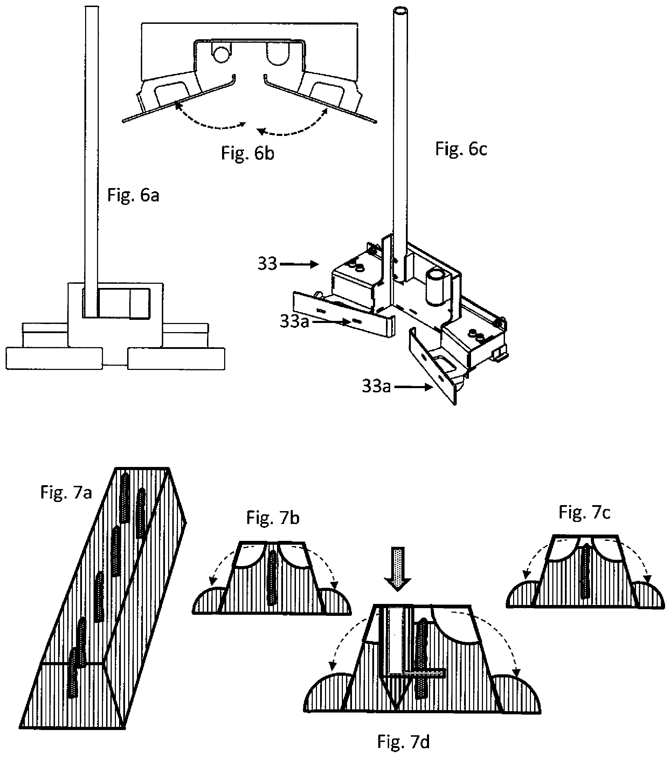

Figures 1-3, 4a-4c, 5a,b, and 6a-c show certain aspects of the present assembly, typically schematically, albeit the figures are to scale provided by a design program, whereas figs. 7a-d show an operational mode.

### DETAILED DESCRIPTION OF FIGURES

In the figures:
- 100: machine for harvesting
- 10: movable frame
- 11: motor
- 12: wheel
- 13: speed controller
- 14: central top passage
- 15: central bottom passage
- 16: continuous track
- 20: brush module
- 21: soil replenish unit
- 22: rotatable brush
- 23: scraper
- 24: grubber
- 30: cutting module
- 30a: motor
- 31: tongs
- 31a: tong holder
- 32: cutter
- 33: locator
- 33a: rotatable tactile sensor
- 34: support
- 35: controller
- 36: control notch
- 37: vertical holder
- 38: knife blade
- 39: knife blade protector
- 40: feedback loop
- 41: cutting module track
- 50: cutting module guidance
- 51: cutting module guiding wheels
- 60: rotatable connector
- 70: air pressure system
- 71: tube
- 72: distributor
- 80: location sensor
- 90: storage container

Figure 1 shows the present machine 100 in a field of asparagus beds. The machine comprises continuous tracks 16 and wheels, driven by a motor 12. The frame 10 provides supports to various elements. At a front en a brush module 20 is provided, and at a back end a soil replenish unit 21. Various cutting modules 30 are visible, as well as the feedback loop 40 for circling the cutting modules. At the back end a container 90 is provided for storing asparagus. A rotatble connector 60 to be attached to tubes 71 (not shown), the tubes being in connection to amongst others the cutting modules, typically via a distributor 72, wherein air is provided by an air pressure system 70.

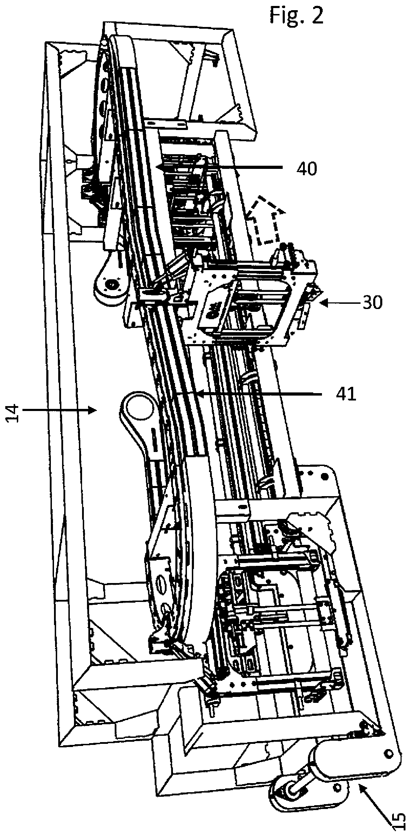

Figure 2 shows the frame with a central top passage 14, allowing circling of the cutting modules and passage of tubes, and a central bottom passage 15, allowing movement over the beds, are shown. Various cutting modules 30, the feedback loop 40, and the cutting module track 41, allowing movement of the cutting modules over the feedback loop, are indicated. Movement of a cutting module is indicated with an arrow.

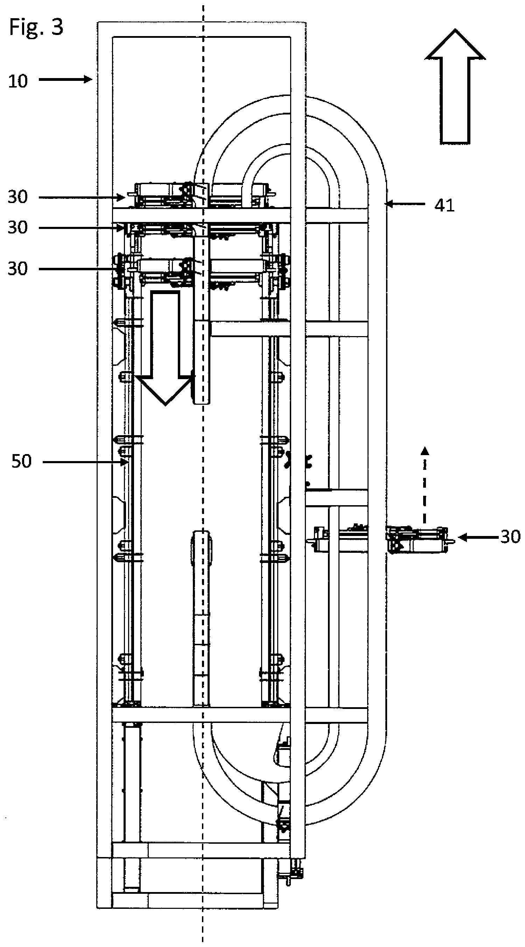

Figure 3 shows a top view of the present module. The longitudinal axis is indicated, as well as movement of the frame 10 and cutting modules 30. Various cutting modules located at a front end of the frame are indicated, as well as the cutting module guidance 50. Also a cutting module track 41 is shown.

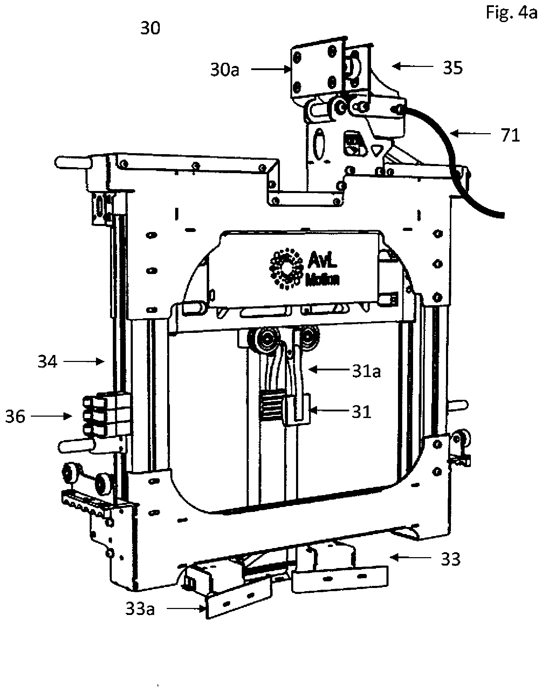

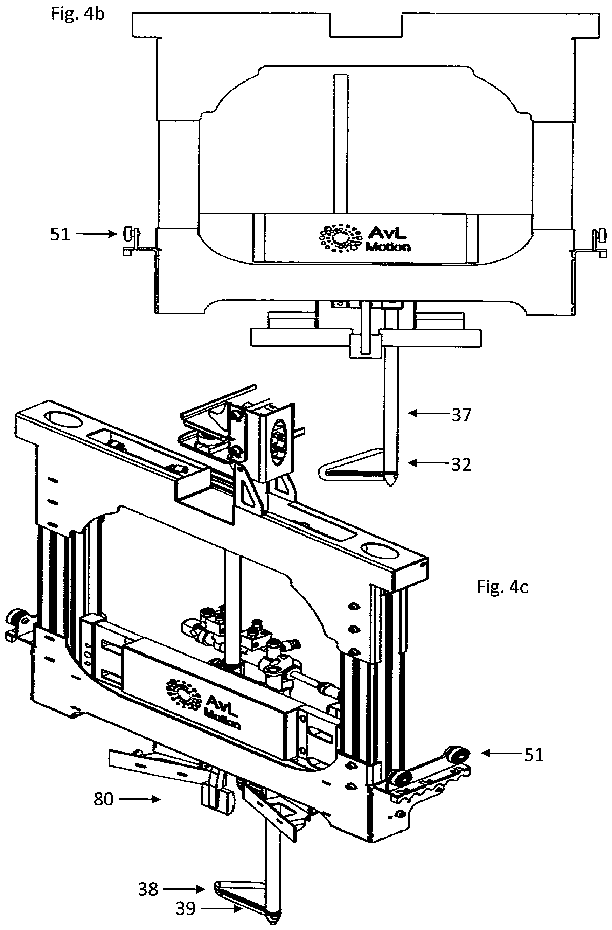

Figure 4a shows a cutting module 30. Therein a motor 30a and a tube 71 are shown. Also the support 34 for further elements of the module is shown. At a side notches 36 are provided, triggering various actions of the present module. At a bottom end the asparagus locator 33 and rotatable tactile sensors 33a are indicated. A controller 35 addresses the various elements of the cutting module. The central part of the module, comprising tongs 31 for grabbing asparagus, tong holders 31a, locator 33, vertical holder, knife blade, and so on, can move in a horizontal direction within the module, in order to e.g. precisely locate, cut and grab an asparagus, whereas the locator also directs the module along the longitudinal direction.

In a method of operation the present module is activated by a signal provider. Various cylinders are located in the support and in the elements of the module, of which one moves the cutter into the ground. If the cutter is fully submerged in the ground the cylinder provides a signal. The second cylinder is then activated and extended. When fully extended a further cylinder is addressed which activates the tongues for grabbing the asparagus. The second cylinder moves upwards and thereby activates a further cylinder for cutting. The cutter is moved into the ground and the asparagus is cut. Then the asparagus is retracted. When one of the notches is activated closed to the container the asparagus is released in the container.

Figure 4b shows a cutting module 30. Therein cutting module guidance wheels 51, moving over the feedback loop, are shown at sides of the module. Also a downwards extended vertical holder is shown, the holder comprising the cutter. The holder is provided with a tapered end, for allowing swift movement when entering the soil.

Figure 4c shows a cutting module 30. Therein module guidance wheels 51 are shown. Also a location sensor 80 is indicated. The knife blade 38 is ready to cut an asparagus (in the soil) and is out of the knife blade protector.

Figures 5a,b show details of the present brush module 20. A rotatable brush 22, a scraper 23 and a grubber 24 are shown.

Figures 6a-c show details of the present locator 33, including the rotatable tactile sensor 33a.

Figures 7a-d schematically show the present method. A bed with asparagus is shown in figure 7a. A top fraction of the beds is removed, at a left and right side thereof. Then the top of the asparagus is made visible, by brushing away soil (fig. 7c). The asparagus may now be located. In fig. 7d the cutting module, and specifically the knife thereof, has entered the soil and the knife cuts the asparagus at a predefined depth.

## Claims

1. Machine (100) for harvesting of asparagus comprising
a movable frame (10) with a longitudinal axis,
at least two asparagus cutting modules (30) movably connected to the frame, preferably 3-20 cutting modules,
**characterized in**
the machine is for continuous harvesting,
a cutting module guidance (50), wherein the cutting module guidance (50) is adapted to move at a speed substantially equal to the machine speed but of opposite direction,
a feedback loop (40) for spatially cycling each cutting module (30) from a back side to a front side of the frame (10) and from a front side to a back side of the frame (10), and
a driving system cutting modules (30).

2. Machine (100) according to claim 1, **characterized in that** the movable frame (10) comprises a motor (11) and wheels (12), a speed controller (13), and optionally at least one continuous track (16).

3. Machine (100) according to any of claims 1-2, wherein the cutting module guidance (50) is located at an inner side of the frame (10), is in contact with at least one module (30), the at least one module (30) being in a position for harvesting.

4. Machine (100) according to any of claims 1-3, comprising a rotatable connector (60) connected to the frame (10), and for each cutting module (30) at least one flexible tube (71) connected to the rotatable connector.

5. Machine (100) according to claim 4, wherein the driving system, is an air pressure system (70) for driving cutting modules (30) by air, wherein the rotatable connector (60) is connected to the air pressure system (70) by at least one tube (71), and/or
wherein the frame (10) comprises a central top passage (14) for allowing movement of the cutting modules (30) in a longitudinal direction, and/or
comprising a central bottom passage (15) for allowing free movement of the machine (100) over a row of asparagus.

6. Machine (100) according to any of claims 1-5, wherein the cutting module (30) comprises an asparagus tongs (31), a cutter (32), a asparagus locator (33), and wherein the cutting module (30) is movably located in a support (34) allowing movement in a horizontal direction perpendicular to the longitudinal axis.

7. Machine (100) according to any of claims 1-6, comprising at least one of a soil replenish unit (21), for transferring removed soil back to an asparagus bed, and a brush module (20) connected to the frame (10) for removing a top fraction of the soil, and/or
comprising a controller (35) for controlling the at least one cutting module, frame speed, feedback loop speed, the brush module, and the soil replenish unit, and/or
comprising a location sensor (80), for detecting an asparagus bed, and/or
comprising an asparagus storage container (90).

8. Method of harvesting of asparagus, comprising moving a harvesting machine (100) according to any of claims 1-7 horizontally over a bed comprising asparagus parallel to a longitudinal axis of the bed,
removing a top layer of the bed soil,
locating an asparagus,
moving a cutting module (30) in an opposite direction of the harvesting machine (100) at a substantially same speed,
harvesting the asparagus, and
moving the cutting module (30) to a front side of the harvesting machine (100).

## Patentansprüche

1. Maschine (100) zum Ernten von Spargel, umfassend
einen beweglichen Rahmen (10) mit einer Längsachse, mindestens zwei Spargelschneidmodule (30), die beweglich mit dem Rahmen verbunden sind, vorzugsweise 3-20 Schneidmodule,
**gekennzeichnet in,**
die Maschine ist für die kontinuierliche Ernte vorgesehen ist,
eine Schneidmodulführung (50), wobei die Schneidmodulführung (50) angepasst ist, dass sie sich mit einer Geschwindigkeit bewegt, die im Wesentlichen der Maschinengeschwindigkeit entspricht, jedoch in entgegengesetzter Richtung verläuft, eine Rückkopplungsschleife (40) zum räumlichen Durchlaufen jedes Schneidmoduls (30) von einer Rückseite zu einer Vorderseite des Rahmens (10) und von einer Vorderseite zu einer Rückseite des Rahmens (10), und ein Antriebssystem Schneidmoduls (30).

2. Maschine (100) nach Anspruch 1, **dadurch gekennzeichnet, dass** der bewegliche Rahmen (10) einen Motor (11) und Räder (12), einen Geschwindigkeitsregler (13) und optional mindestens eine durchgehende Raupe (16) umfasst.

3. Maschine (100) nach einem der Ansprüche 1-2, wobei sich die Schneidmodulführung (50) an einer Innenseite des Rahmens (10) befindet, mit mindestens einem Modul (30) in Kontakt steht, wobei sich das mindestens eine Modul (30) in einer Position zum Ernten befindet.

4. Maschine (100) nach einem der Ansprüche 1-3, die einen drehbaren Verbinder (60) umfasst, der mit dem Rahmen verbunden ist, und für jedes Schneidmodul (30) mindestens einen flexiblen Schlauch (71), der mit dem drehbaren Verbinder verbunden ist.

5. Maschine (100) nach Anspruch 4, wobei das Antriebssystem ein Luftdrucksystem (70) zum Antreiben von Schneidmodulen (30) durch Luft ist, wobei der drehbare Verbinder (60) durch mindestens einen Schlauch (71) mit dem Luftdrucksystem (70) verbunden ist, und/oder
wobei der Rahmen (10) einen zentralen oberen Durchgang (14) aufweist, der die Bewegung der Schneidmodule (30) in Längsrichtung ermöglicht, und/oder die einen zentralen Bodendurchgang (15) aufweist, der eine freie Bewegung der Maschine (100) über eine Spargelreihe ermöglicht.

6. Maschine (100) nach einem der Ansprüche 1 - 5, wobei das Schneidmodul (30) eine Spargelzange (31), einen Schneider (32) und einen Spargelhalter (33) umfasst, und wobei das Schneidmodul (30) beweglich in einer Halterung (34) angeordnet ist, die eine Bewegung in horizontaler Richtung senkrecht zur Längsachse ermöglicht.

7. Maschine (100) nach einem der Ansprüche 1 - 6, die mindestens eine Bodenauffülleinheit (21) zum Zurückführen entfernter Erde auf ein Spargelbeet und ein mit dem Rahmen (10) verbundenes Bürstenmodul (20) zum Entfernen eines oberen Teils der Erde umfasst, und/oder
die einen Controller (35) zum Steuern des mindestens einen Schneidmoduls, der Rahmengeschwindigkeit, der Rückkopplungsschleifengeschwindigkeit, des Bürstenmoduls und der Bodenauffülleinheit umfasst, und/oder
umfassend einen Ortungssensor (80) zum Erkennen eines Spargelbeets, und/oder
umfassend einen Spargelaufbewahrungsbehälter (90).

8. Verfahren zur Ernte von Spargel, umfassend
Bewegen einer Erntemaschine (100) nach einem der Ansprüche 1-7 horizontal über einem Spargelbeet parallel zur Längsachse des Beets,
Entfernen einer oberen Schicht des Beetbodens,
einen Spargel finden,
Bewegen eines Schneidmoduls (30) in eine entgegengesetzte Richtung der Erntemaschine (100) mit im Wesentlichen gleicher Geschwindigkeit,
enten der Spargel und
Bewegen des Schneidemoduls (30) an eine Vorderseite des Erntemaschine (100).

## Revendications

1. Machine (100) de récolte d'asperges comprenant
un châssis mobile (10) à axe longitudinal,
au moins deux modules de coupe d'asperges (30) reliés de manière mobile au châssis, de préférence 3 à 20 modules de coupe,
**caractérisé en**
la machine est destinée à la récolte continue,
un guidage de module de coupe (50), dans lequel le guidage de module de coupe (50) est adapté pour se déplacer à une vitesse sensiblement égale à la vitesse de la machine mais de direction opposée,
une boucle de rétroaction (40) permettant de faire circuler spatialement chaque module de coupe (30) d'un côté arrière vers un côté avant du cadre (10) et d'un côté avant vers un côté arrière du cadre (10), et
un système d'entraînement module de coupe (30).

2. Machine (100) selon la revendication 1, **caractérisée en ce que** le châssis mobile (10) comprend un moteur (11) et des roues (12), un variateur de vitesse (13), et éventuellement au moins une chenille continue (16).

3. Machine (100) selon l'une quelconque des revendications 1-2, dans laquelle le guidage du module de coupe (50) est situé sur un côté intérieur du châssis (10), est en contact avec au moins un module (30), le ou les modules (30) étant dans une position de récolte.

4. Machine (100) selon l'une quelconque des revendications 1-3, comprenant un connecteur rotatif (60) relié au châssis (10), et pour chaque module de coupe (30) au moins un tube flexible (71) relié au connecteur rotatif.

5. Machine (100) selon la revendication 4, dans laquelle le système d'entraînement est un système à pression d'air (70) pour entraîner des modules de coupe (30) par air, dans laquelle le connecteur rotatif (60) est relié au système à pression d'air (70) par au moins un tube (71), et/ou
dans laquelle le châssis (10) comprend un passage supérieur central (14) pour permettre le mouvement des modules de coupe (30) dans un sens longitudinal, et/ou comprenant un passage inférieur central (15) pour permettre le libre mouvement de la machine (100) sur une rangée d'asperges.

6. Machine (100) selon l'une quelconque des revendications 1-5, dans laquelle le module de coupe (30) comprend une pince à asperges (31), un coupeur (32), un localisateur d'asperges (33), et dans laquelle le module de coupe (30) est situé de manière mobile dans un support (34) permettant un mouvement dans une direction horizontale perpendiculaire à l'axe longitudinal.

7. Machine (100) selon l'une quelconque des revendications 1-6, comprenant au moins une unité de réapprovisionnement de sol (21), pour transférer le sol retiré vers un lit d'asperges, et un module de brosse (20) relié au châssis pour retirer une fraction supérieure du sol, et/ou
comprenant un contrôleur (35) pour contrôler le ou les modules de coupe (30), la vitesse du cadre, la vitesse de la boucle de rétroaction, le module de brosse et l'unité de réapprovisionnement du sol, et/ou
comprenant un capteur de localisation (80), pour détecter un lit d'asperges, et/ou comprenant un récipient de stockage d'asperges (90).

8. Procédé de récolte d'asperges, comprenant
déplacer une machine de récolte (100) selon l'une quelconque des revendications 1-7 horizontalement sur un lit comprenant des asperges parallèlement à un axe 1 longitudinal du lit,
enlever une couche supérieure du sol du lit,
localiser une asperge,
déplacer un module de coupe (30) dans une direction opposée de la machine de récolte (100) à une vitesse sensiblement identique,
récolter les asperges, et
déplacer le module de coupe (30) vers l'avant de la machine de récolte (100).
